# EUROPEAN PATENT SPECIFICATION

(11) **EP 2 162 694 B1**
(45) Date of publication and mention of the grant of the patent: **24.11.2010**
(21) Application number: 08738113.3
(22) Date of filing: 12.05.2008
(51) Int. Cl.: F28F 3/12, F24J 2/22, F24J 2/48, C04B 35/00, B28B 3/02, B28B 3/12, B28B 5/02, B30B 5/06

(54) **A PROCESS FOR REALISING SOLAR PANELS.**
VERFAHREN ZUR HERSTELLUNG VON SOLARPANEELEN
PROCÉDÉ DE RÉALISATION DE PANNEAUX SOLAIRES

(30) Priority: 10.07.2007 IT MO20070231
(43) Date of publication of application: 17.03.2010
(73) Proprietor: System S.P.A., Via Ghiarola Vecchia 73 Fiorano Modenese 41100 Modena (IT)
(72) Inventor: STEFANI, Franco, I-41049 Modena (IT)
(74) Representative: Gotra, Stefano
(86) International application number: PCT/IB2008/051874
(87) International publication number: WO 2009/007862

(56) References cited:
- EP-A- 1 500 480
- WO-A-2004/065085
- WO-A-2006/099894
- DE-A1- 4 240 252
- GB-A- 2 045 423
- JP-A- 10 107 194

## Description

### Technical Field

The invention relates to a process for realising solar panels, of a type in which the incident energy (solar) is transmitted to a liquid present and circulating in cavities predisposed internally of the panels themselves.

### Background Art

The process relates to the realisation of solar panels habitually used for example for covering walls and cladding buildings and which as well as their normal cladding function also perform a function of exploiting the incident solar energy.

Traditional solar panels are well known which, summarising, constitute equipment or plants specifically dedicated to capturing solar energy and converting it partly into heat energy for heating a liquid which flows inside cavities the panels themselves are provided with. Normally these cavities are constituted by metal tubes connected to form a circuit which in the majority of cases is provided with a coil heat exchanger through which part of the heat energy captured is relinquished to another fluid for final use (for example hot water). In this equipment numerous applications have been devised to improve plant performance.

In any case these are "dedicated" apparatus which have to be physically located in positions having good solar exposure, and which are however "external" with respect to the body of the buildings. Further, the flat part which constitutes the panel normally exhibits a significant thickness.

A first example of prior art is given in DE 4240252, which discloses a sandwich ceramic plate structure, to form separated hollow channels of a low height, which has an inner glazing where the clay used for the plate has the same thermal expansion coefficients as the glazing. The two parallel plates are in contact with each other, they are firmly bonded together by the glazing layers during firing, in a sealed bond. Of the two sandwich plates, a projecting edge at one over the whole assembly height forms a trough, for the other plate to be inserted in an exact fit. The inner plate can have an outer profile or curve, for optical and practical applications, especially in the shape of a bowl or container.

A second example of prior art is given in EP 1500480 which discloses a device comprising: a lower element bearing a lower rest plane for supporting materials to be pressed, the lower rest plane also forming a lower surface of closure of the device; the lower element resting slidably on a lower pressing organ; an upper element which is elastically deformable and provided with at least one active surface, which active surface is predisposed to face the lower rest plane; a forming frame which projects below a downwards-facing surface of the upper pressing organ and which is predisposed above the upper element and delimits a perimeter of a pressing zone, The forming frame also generates, following a pressing operation, an edge of a final pressed piece which exhibits a greater compaction and therefore a greater density than other zones of the final pressed piece.

An aim of the present invention is to provide a new and simple process for realising solar panels (i.e. of the type in which the incident solar energy is transmitted to a liquid present and circulating in cavities predisposed internally of the panels) which are perfectly integrated in habitually-used elements, for example, for covering walls and cladding buildings.

A further aim of the present invention is to give rise to a process for production of the integrated elements which can be realised continuously on a same forming line of the elements in which the elements are formed starting from raw materials in the form of powders.

A "technical" advantage of the process consists in the fact that it enables realising a a solar panel which can be integrated in a wall-covering element and cladding for buildings, characterised by being extremely slim with respect to usual solar panels, though the slimness thereof in no way limits their use as typical covering elements for realising ventilated walls. Further advantages of the process consist in the use of low-cost raw materials which are very low pollutants, and low production costs.

A further advantage of the process relates to the possibility of obtaining a product which, by its nature, satisfies any aesthetic requirement.

### Disclosure of Invention

Further characteristics and advantages of the invention will better emerge from the detailed description that follows of some preferred but non-exclusive embodiments of the invention, illustrated by way of non-limiting example in the accompanying figures of the drawings, in which:

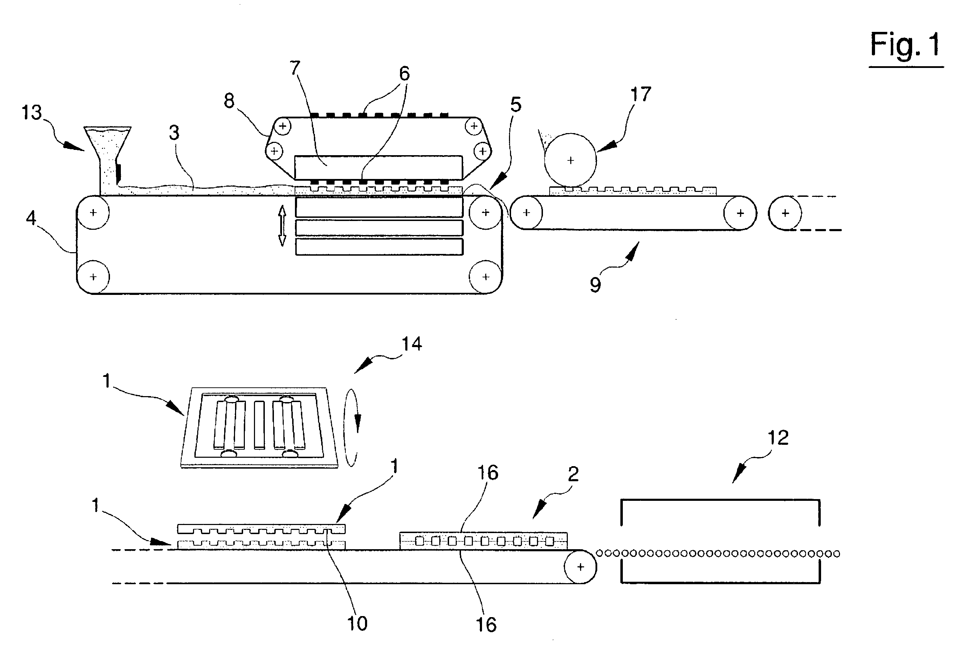

figure 1 is a schematic section of a plant of the invention, made along a vertical and longitudinal median plane;

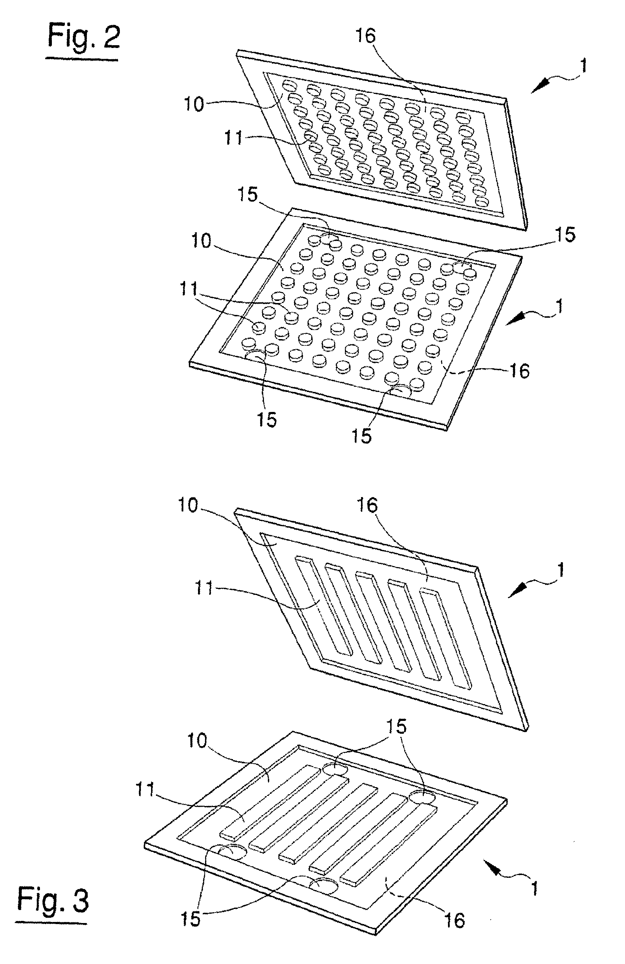

figures 2 and 3 are perspective views of two slabs during a stage of reciprocal coupling;

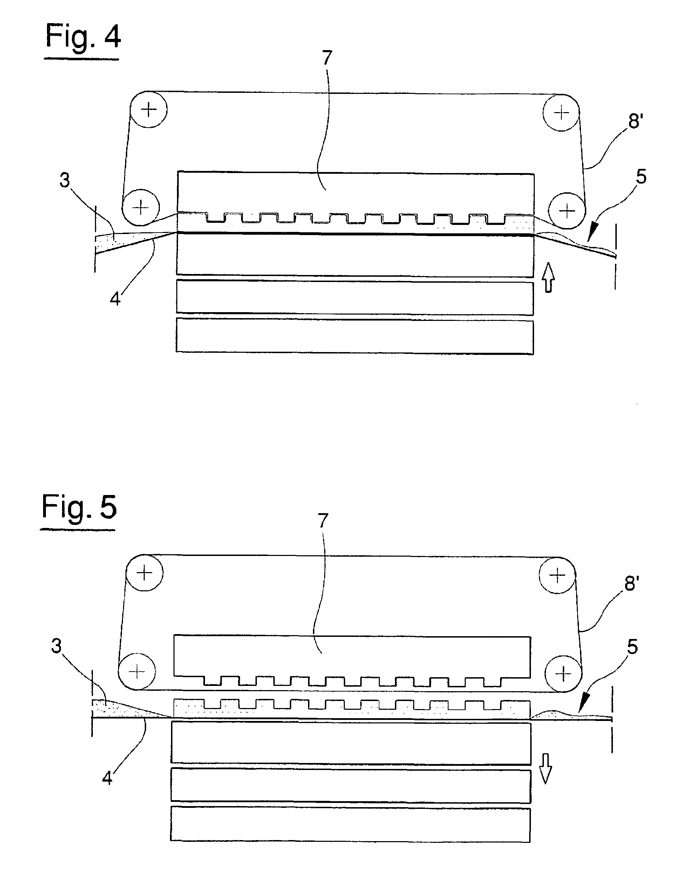

figures 4 and 5 are enlarged-scale views of part of a schematic section made along a vertical and longitudinal median plane of an embodiment which is not part of the invention.

The figures of the drawings illustrate a plant which actuates a process for realising solar panels, of a type in which the incident (solar) energy is transmitted to a liquid present and circulating in cavities predisposed internally of the panels. The process essentially comprises the following main stages: forming slabs 1 exhibiting, on at least a first surface 10 thereof, a plurality of reliefs or projections 11 arranged in a predetermined design; possible covering of the surface of the first surface 10 with a glass-based material or the like (glaze); stable and solid coupling in a single body of two slabs 1 by superposing the first surface 10 of one on the first surface 10 of the other such that the tops of at least part of the relative reliefs or projections 11 are reciprocally contactingly facing.

The stable and solid coupling in a single body or panel 2 of two of the slabs I by superposing the first surface 10 of one on the first surface 10 of the other is done following welding by at least partial fusion of the reciprocally-facing surfaces in contact of the tops of the relative reliefs or projections 11 and the subsequent cooling thereof to a temperature at which a stable solid state thereof is obtained.

In particular the at least partial fusion of the reciprocally- facing contacting surfaces of the relative reliefs or projections 11 is obtained by subjecting the whole coupling of two slabs 1 to at least a heat cycle comprising an initial heating stage up to a predetermined temperature which depends on the material, a possible period maintained at that temperature and a stage of cooling up to the obtaining of a stable solid state.

The forming of the slabs 1 exhibiting on at least a first surface thereof 10 a plurality of reliefs or projections 11 arranged in a predetermined design, happens, in a first possible embodiment, via an operation of pressing of ceramic powders which is then, after the coupling of the facing slabs to one another, directly obtained by a single firing operation with which the solidity between the contacting surfaces of the reliefs or projections 11 I contactingly facing one another is done at the same time as the vitrification of the bodies of the slabs which gives the whole assembly the final shape of the panel. At the end of this operation the two slabs 1 are reciprocally welded at the internal surfaces 10 thereof to form a monolithic panel in a single body 2 of which the external surfaces are constituted by the second surfaces 16 of the original slabs 1. A cavity is delimited internally of the monolithic panel 2, the surface of which cavity can have various conformations depending on the preselected shapes for the reliefs or projections 11, and which exhibits excellent and long-lasting characteristics of resistance to aggressive liquids. These characteristics are further improved by the presence of a layer of glassy material deriving from the fusion of the glaze distributed on the surface before firing.

The forming of the slab 1 exhibiting on at least a first surface 10 thereof a plurality of reliefs or projections 11 arranged in a predetermined design can be actuated via a pressing operation of ceramic powders to which, after a possible covering of the surface of the first surface 10 with glass-based material or the like, in particular glaze, is subjected to a first firing which has the aim of giving each slab a solid-state stability (with more or less complete vitrification). The whole process, in this case, comprises double-firing and includes, in order: a pressing operation of ceramic powders; a covering of the surface of the first surface 10 with a glass-based material or the like (glaze); a first firing operation which has the aim of giving each single slab a solid-state stability (with more or less complete vitrification); the coupling of two slabs, already subjected to the first firing, by superposition of the first surface 10 of one on the first surface 10 of the other such that the tops of at least part of the relative reliefs or projections 11 are reciprocally and contacting coupled; a second firing operation at a sufficient temperature to realise welding by fusion of the reciprocally-facing contacting surfaces of the tops of at least part of the relative reliefs or projections 11; a cooling stage up to reaching a stable solid state of the panel.

During the pressing stage, or preferably during an intermediate stage prior to firing, through-holes 15 are made in one of the two slabs which will go to form the coupling, and in particular in the slab of the two slabs which will face the other superiorly to the other; the through-holes 15 have a double function, as during the process it allows free outlet of the vapours developing during the firing of the coupled assembly and also enables insertion of conduits destined to convey the flow of liquid internally of the solar panel realised with the process.

The above-described process, with particular reference to the first illustrated embodiment, can advantageously be realised with a plant in which the ceramic powder pressing is realised continuously starting from a layer of ceramic powders 3 which is generated, for example, by interaction with the outlet mouth of a hopper 13 and a conveyor belt 4 on which the layer is supported. The conveyor belt 4 is in turn slidably supported on a rest plane of a press 5 with which an upper die or matrix 6, positioned inferiorly of a punch 7, cooperates. In the illustrated embodiment the punch 7 is fixed while the underlying rest plane of the press 5 is mobile in a vertical direction against the punch 7.

The upper half-die or matrix 6 is made of rubber or the like and is preferably afforded on a ring-wound matrix-bearing belt 8 which supports at least a second matrix and is sized and predisposed to be positioned, with respect to the mobile punch 7, such that while one of the upper half-dies or matrices 6 is located in a work position inferiorly of the punch 7, the other is located in an inactive position without interfering therewith.

The plant comprises, arranged in ordered succession downstream of the press 5 along a belt conveyor line 9; a device 17 for covering the whole first surface 10 of the slabs 1 with a thin uniform layer of glassy material, or glaze, preferably mixed with a medium; a raising device 14, which also rotates some of the slabs 1 by 180° about a longitudinal axis parallel to the direction of motion of the line, and centredly deposits the slabs 1 on other of the slabs 1 in transit on the conveyor line 9 in the original arrangement with the first surface 10 facing upwards, a continuous kiln 12 for actuation of the heating cycle.

In a further embodiment of the invention, upstream of the device 14 two tracts of line can be arranged in which the slabs 1 are formed, which then flow into a single line at the position of the device 14 itself. In this case one of the two tracts of line can be dedicated to the forming of the slabs 1 destined to be arranged inferiorly in the following coupling, while the other tract of line can be dedicated to the forming of slabs 1 destined to be arranged superiorly in the following coupling and provided with through-holes 15.

An embodiment which is not part of the invention has a different structuring of the device which perform the pressing. The device comprises a second ring-wound belt 8' which is sized and predisposed to be positioned between the punch (7), bearing an upper half-die or matrix 6' in a solid constraint, and the rest plane of the press 5. The second ring-wound belt 8' is realised in elastically deformable material (rubber, silicone rubber or the like), and is relatively thin such as to deform during the pressing operation in order to adhere to the recessed surface of the upper half-die or matrix 6', The presence of the ring-wound belt 8' considerably contributes, including by virtue of the elastic return thereof, to facilitating the detachment of the upper half-die or matrix 6' once the pressing action has been completed. The predetermined maximum temperatures in the kiln 12 are comprised between 800°C and 1200°C.

Among the numerous advantages of the invention, of note are its simplicity, contained costs and the possibility of employing high levels of automation.

## Claims

1. A process for realising solar panels, of a type in which incident solar energy is transmitted to a liquid present and circulating in cavities predisposed internally of the panels, comprising the following main stages: forming slabs (1) exhibiting, on at least a first surface (10) thereof, a plurality of reliefs or projections (11) arranged in a predetermined design; possible covering of the surface of the first surface (10) with a glass-based material or the like; stable and solid coupling in a single body of two slabs (1) for superposing the first surface (10) of one on the first surface (10) of the other such that tops of at least part of the relative reliefs or projections (11) are reciprocally contactingly facing;
wherein the stable and solid coupling in a single body or panel (2) of the two slabs (1) by superposing the first surface (10) of one on the first surface (10) of another is performed following at least partial welding by fusion of the contacting facing surfaces of the tops of the reliefs or projections (11) and the subsequent cooling up to reaching a stable solid state;
wherein the at least partial fusion of the facing contacting surfaces of the tops of the reliefs or projections (11) is obtained by subjecting the coupled two slabs (1) to at least a heat cycle comprising an initial heating stage, an eventual treatment at a predetermined temperature and a stage of cooling up to reaching a stable solid state.
**characterised in that** the forming of slabs (1) exhibiting on a first surface (10) thereof a plurality of reliefs or projections (11) arranged in a predetermined design is realised actuating the following steps:
pressing of ceramic powders realised continuously starting from a layer of ceramic powders (3) which is fashioned by interaction between a supply hopper (13) and a conveyor belt (4) and is supported by the conveyor belt (4) which is in turn slidably supported on a rest plane of a press (5); said pressing being performed by means of an upper half-die or matrix (6) operating on the rest plane which slidably supports the conveyor belt (4), which upper half-die or matrix (6) is predisposed inferiorly to a punch (7); the upper half-die or matrix (6) being associated to a ring-wound belt (8) which acts as a die-bearing belt;
the ring-wound die-bearing belt (8) supporting at least a second matrix; the ring-wound die-bearing matrix (6) being sized and predisposed to be positioned with respect to the punch (7) such that while one of the upper half-dies or matrices (6) is located in a work position below the punch (7), the other of the upper half-dies or matrices (6) is located in an inactive position without interfering therewith.

2. The process of claim 1**,** wherein the forming of slabs (1) exhibiting on at least a first surface (10) thereof a plurality of reliefs or projections (11) arranged in a predetermined design, is realised via said pressing operation of ceramic powders to which, after possibly coating the first surface (10) with glass-based or like material, a first firing is performed.

3. A plant for actuating the process of claims 1 or 2, wherein the pressing of ceramic powders is realised continuously starting from a layer of ceramic powders (3) which is fashioned by interaction between a supply hopper (13) and a conveyor belt (4) and is supported by the conveyor belt (4) which is in turn slidably supported on a rest plane of a press (5); an upper half-die or matrix (6) operating on the rest plane which slidably supports the conveyor belt (4), which upper half-die or matrix (6) is predisposed inferiorly to a punch (7).
the upper half-die or matrix (6) being made of rubber or a like material.
the upper half-die or matrix (6) being associated to a ring-wound belt (8) which acts as a die-bearing belt.
**characterised in that** the ring-wound die-bearing belt (8) supports at least a second matrix; the ring-wound die-bearing matrix (6) being sized and predisposed to be positioned with respect to the punch (7) such that while one of the upper half-dies or matrices (6) is located in a work position below the punch (7), the other of the upper half-dies or matrices (6) is located in an inactive position without interfering therewith.

4. The plant of claim 4, wherein it comprises, arranged in an ordered succession downstream of the press (5) along a belt conveyor line (9); a device (17) for covering the whole first surface (10) of the slabs (1) with a thin uniform layer of glassy material, or glaze; a raising device (14), which rotates some of the slabs (1) by 180° about a longitudinal axis parallel to a direction of motion of the line, and centredly deposits the slabs (1) on others of the slabs (1) in transit on the conveyor line (9) in an original arrangement with the first surface (10) facing upwards, a continuous kiln (12) for actuation of the heat cycle.

5. The plant of claim 5, wherein the predetermined maximum temperatures reached in the kiln (12) are comprised between 800°C and 1200°C.

## Patentansprüche

1. Verfahren zur Herstellung von Solarpaneelen von einem Typ, bei welchem die einfallende Sonnenenergie auf eine Flüssigkeit übertragen wird, vorhanden und umlaufend in Vertiefungen, die im Inneren der Paneele vorgesehen sind, enthaltend die folgenden Hauptphasen: das Formen von Platten (1), die wenigstens auf einer ihrer ersten Fläche (10) eine Anzahl von Reliefs oder Vorsprüngen (11) aufweisen, angeordnet nach einem vorgegebenen Muster; mögliche Abdeckung der Oberfläche der ersten Fläche (10) mit einem glasartigen Material oder ähnlichem; stabile und feste Verbindung von zwei Platten (1) zu einem einzigen Körper durch Auflegen der ersten Fläche (10) der einen auf die erste Fläche (10) der anderen, so dass die oberen Enden von wenigstens einem Teil der entsprechenden Reliefs oder Vorsprünge (11) im Kontakt einander gegenüberliegen; wobei die stabile und feste Verbindung der beiden Platten (1) zu einem einzigen Körper oder Paneel (2) durch Auflegen der ersten Fläche (10) der einen auf die erste Fläche (10) der anderen infolge des wenigstens teilweisen Verschweissens durch Fusion der sich kontaktierenden gegenüberliegenden Flächen der oberen Enden der Reliefs oder Vorsprünge (11) und des anschliessenden Abkühlens erfolgt, bis ein stabiler und fester Zustand erreicht ist; wobei die wenigstens teilweise Fusion der sich kontaktierenden gegenüberliegenden Flächen der oberen Enden der Reliefs oder Vorsprünge (11) erhalten wird, indem die miteinander verbundenen beiden Platten (1) wenigstens einem Heizzyklus unterzogen werden, enthaltend eine anfängliche Heizphase, eine eventuelle Behandlung bei einer vorgegebenen Temperatur und eine Kühlphase, um den stabilen und festen Zustand zu erreichen; **dadurch gekennzeichnet, dass** das Formen der Platten (1), die auf einer ihrer ersten Fläche (10) eine Anzahl von Reliefs oder Vorsprüngen (11) aufweisen, angeordnet nach einem vorgegebenen Muster, unter Anwendung der folgenden Phasen realisiert wird: kontinuierliches Pressen von Keramikpulvern, ausgehend von einer Schicht von Keramikpulvern (3), welche durch das Zusammenwirken zwischen einem Zuführtrichter (13) und einem Förderband (4) gebildet und von dem Förderband (4) getragen wird, welches wiederum gleitbar auf einer Auflageebene einer Presse (5) gehalten ist; wobei der genannte Pressvorgang mit Hilfe einer oberen Halbform oder Matrize (6) ausgeführt wird, die auf die Auflageebene wirkt, welche gleitbar das Förderband (4) hält, welche obere Halbform oder Matrize unten mit einem Stempel (7) versehen ist; wobei die obere Halbform oder Matrize (6) einem ringförmig gewundenen Band (8) zugeordnet ist, welches als ein Formträgerband wirkt; wobei das ringförmig gewundene Formträgerband (8) wenigstens eine zweite Matrize trägt; wobei die Matrize (6) des ringförmig gewundenen Formträgerbandes ausgelegt und vorgesehen ist, um im Verhältnis zu dem Stempel (7) positioniert zu werden, so dass, während eine der oberen Halbformen oder Matrizen (6) in einer Arbeitsposition unter dem Stempel (7) angeordnet ist, die andere der oberen Halbformen oder Matrizen (6) in einer Ruheposition angeordnet ist, ohne diesen zu behindern.

2. Verfahren nach Patentanspruch 1, bei welchem das Formen von Platten (1), die auf wenigstens einer ihrer Fläche (10) eine Anzahl von Reliefs oder Vorsprüngen (11) auf weisen, angeordnet nach einem vorgegebenen Muster, durch den genannten Pressvorgang von Keramikpulvern realisiert wird, auf welchen nach einem möglichen Abdecken der ersten Fläche (10) mit glasartigem oder ähnlichem Material, ein erstes Brennen folgt.

3. Anlage zum Durchführen des Verfahrens nach Patentanspruch 1 oder 2, bei welchem das Pressen von Keramikpulvern kontinuierlich erfolgt, ausgehend von einer Schicht aus Keramikpulvern (3), welche gebildet ist durch das Zusammenwirken zwischen einem Zuführtrichter (13) und einem Förderband (4) und von dem Förderband (4) getragen wird, welches wiederum gleitbar auf einer Auflageebene einer Presse (5) gehalten ist; wobei eine obere Halbform oder Matrize (6) auf die Auflageebene wirkt, welche gleitbar das Förderband (4) hält, welche obere Halbform oder Matrize (6) unten mit einem Stempel (7) versehen ist; wobei die obere Halbform oder Matrize (6) aus Gummi oder einem ähnlichen Material hergestellt ist; und wobei die obere Halbform oder Matrize (6) einem ringförmig gewundenen Band (8) zugeordnet ist, welches als Formträgerband wirkt; **dadurch gekennzeichnet, dass** das ringförmig gewundene Formträgerband (8) wenigstens eine zweite Matrize trägt; wobei die Matrize (6) des ringförmig gewundenen Formträgerbandes ausgelegt und vorgesehen ist, um im Verhältnis zu dem Stempel (7) positioniert zu werden, so dass, während eine der oberen Halbformen oder Matrizen (6) in einer Arbeitsposition unter dem Stempel (7) angeordnet ist, die andere der oberen Halbformen oder Matrizen (6) in einer Ruheposition angeordnet ist, ohne diesen zu behindern.

4. Anlage nach Patentanspruch 4, in welcher, angeordnet in einer geordneten Folge stromabwärts der Presse (5) entlang einer Bandförderbahn (9), enthalten ist; eine Vorrichtung (17) zum Abdecken der gesamten ersten Fläche (10) der Platten (1) mit einer dünnen gleichmässigen Schicht aus glasartigem Material oder Glasur; eine Hebevorrichtung (14), welche einige der Platten (1) um 180° um eine Längsachse parallel zu einer Vorlaufrichtung der Bahn dreht und die Platten (1) zentriert auf anderen der auf der Förderbahn (9) durchlaufenden Platten (1) ablegt, und zwar entsprechend der ursprünglichen Anordnung der ersten nach oben zeigenden Fläche (10); ein kontinuierlicher Ofen (12) zum Durchführen des Heizzyklus.

5. Anlage nach Patentanspruch 5, bei welchem die vorgegebenen Höchsttemperaturen, die in dem Ofen (12) erreicht werden, zwischen 800° und 1200° betragen.

## Revendications

1. Procédé de réalisation de panneaux solaires, du type dans lequel l'énergie solaire incidente est transmise à un liquide présent et circulant dans des cavités prédisposées intérieurement aux panneaux, comprenant les phases principales suivantes: formage de dalles (1) présentant, sur au moins une propre première surface (10), une pluralité de reliefs ou saillies (11) disposés selon un dessin prédéterminé; éventuel recouvrement de la surface de la première surface (10) avec un matériau à base de verre ou similaire; accouplement stable et solidaire en un seul corps de deux dalles (1) pour superposer la première surface (10) de l'une sur la première surface (10) de l'autre de manière à ce que les sommets d'au moins une partie des relatifs reliefs ou saillies (11) soient réciproquement en face et en contact;
dans lequel l'accouplement stable et solidaire en un seul corps ou panneau (2) des deux dalles (1) par superposition de la première surface (10) de l'une sur la première surface (10) de l'autre soit réalisée à la suite de la soudure par fusion des surfaces opposées en contact des sommets des reliefs ou saillies (11) et le successif refroidissement jusqu'à atteindre un état stable et solidaire;
dans lequel la fusion au moins partielle des surfaces opposées en contact des sommets des reliefs ou saillies (11) est obtenue en soumettant les deux dalles (1) accouplées à au moins un cycle thermique comprenant une phase initiale de réchauffage, un éventuel traitement à une température prédéterminée et une phase de refroidissement jusqu'à atteindre un état stable et solidaire;
**caractérisé en ce que** le formage des dalles (1) présentant sur une propre première surface (10) une pluralité de reliefs ou saillies (11) disposés selon un dessin prédéterminé est réalisé en suivant les phases suivantes:
compression de poudres céramiques réalisée en continu en partant d'une couche de poudres céramiques (3) constituée par l'interaction entre une trémie d'alimentation (13) et un tapis convoyeur(4) et supportée par le tapis convoyeur (4) qui est à son tour supporté de manière glissante sur un plan d'appui d'une presse (5); ladite compression étant réalisée au moyen d'un demi-moule ou matrice supérieur (6) agissant sur la plan d'appui qui supporte de manière coulissante le tapis convoyeur (4), lequel demi-moule ou matrice supérieur (6) étant prédisposé inférieurement à un poinçon (7); le demi-moule ou matrice supérieur (6) étant associé à un tapis fermé en anneau (8) qui agit comme un tapis porte-moule; le tapis (8) porte-moule fermé en anneau supportant au moins une seconde matrice;
la matrice (6) étant dimensionnée et prédisposée pour être positionnée par rapport au poinçon (7) de manière à ce que, pendant que l'un des demi-moules ou matrice supérieur (6) est disposé dans une position de travail sous le poinçon (7), l'autre des demi-moules ou matrices supérieur (6) est disposé dans une position inactive sans interférence avec l'autre.

2. Procédé selon la revendication 1, dans lequel le formage de dalles (1), présentant sur au moins une propre première surface (10) une pluralité de reliefs ou saillies (11) disposés selon un dessin prédéterminé, est réalisé par l'intermédiaire de ladite opération de compression de poudres céramiques à laquelle on fait suivre, après un possible revêtement de la première surface (10) avec un matériau à base de verre ou similaire, une première cuisson.

3. Installation de réalisation du procédé selon les revendications 1 ou 2, dans laquelle la compression des poudres céramiques est réalisée en continu en partant d'une couche de poudres céramiques (3) constituée par l'interaction entre une trémie d'alimentation (13) et un tapis convoyeur(4) et supportée par le tapis convoyeur (4) qui est à son tour supporté de manière glissante sur un plan d'appui d'une presse (5); un demi-moule ou matrice supérieure (6) agissant sur le plan d'appui qui supporte de manière coulissante le tapis convoyeur (4), lequel demi-moule ou matrice supérieur (6) étant prédisposé inférieurement à un poinçon (7); le demi-moule ou matrice supérieur (6) étant réalisé en caoutchouc ou matériau similaire; le demi-moule ou matrice (6) étant associé à un tapis fermé en anneau (8) qui agit comme un tapis porte-moule; **caractérisée en ce que** le tapis (8) porte-moule fermé en anneau supporte au moins une seconde matrice; la matrice (6) étant dimensionnée et prédisposée pour être positionnée par rapport au poinçon (7) de manière à ce que, pendant que l'un des demi-moules ou matrice supérieur (6) est disposé dans une position de travail sous le poinçon (7), l'autre des demi-moules ou matrices supérieur (6) est disposé dans une position inactive sans interférence avec l'autre.

4. Installation selon la revendication 3, qui comprend, disposés en succession ordonnée en aval de la presse (5) le long d'une ligne de convoyage à tapis (9), un dispositif (17) pour revêtir toute la première surface (10) des dalles (1) avec une couche uniforme fine de matériau vitreux, ou émail; un dispositif de soulèvement (14), qui pivote certaines des dalles de 180° autour d'un axe longitudinal parallèle à une direction de déplacement de la ligne, et dépose les dalles (1) de manière centrée sur d'autres dalles (1) transitant sur la ligne de convoyage (9) dans une disposition originale avec la première surface (10) orientée vers le haut; un four en continu (12) pour l'activation du cycle de chauffage.

5. Installation selon la revendication 5, dans laquelle les températures maximum prédéterminées atteintes dans le four (12) sont comprises entre 800°C et 1200°C.
